Europäisches Patentamt

European Patent Office

Office européen des brevets

(11) Veröffentlichungsnummer: **0 295 555 B1**

# EUROPÄISCHE PATENTSCHRIFT

(45) Veröffentlichungstag der Patentschrift:
06.03.91 Patentblatt 91/10

(51) Int. Cl.⁵ : **F25B 21/02, A47J 43/12**

(21) Anmeldenummer: 88109099.7

(22) Anmeldetag: 08.06.88

(54) **Halter mit einem nach oben offenen Hohlraum mit handgeführtem Gerät zur Erzeugung von Schlagoberst.**

(30) Priorität: 17.06.87 AT 1549/87

(43) Veröffentlichungstag der Anmeldung:
21.12.88 Patentblatt 88/51

(45) Bekanntmachung des Hinweises auf die
Patenterteilung:
06.03.91 Patentblatt 91/10

(84) Benannte Vertragsstaaten:
BE CH DE ES FR GB IT LI LU NL SE

(56) Entgegenhaltungen:
DE-A- 1 601 050
DE-A- 3 417 083

(56) Entgegenhaltungen:
DE-C- 639 576
DE-C- 672 427
FR-A- 1 330 745
FR-A- 2 435 821
US-A- 3 174 291

(73) Patentinhaber: Kirchler, Manfred
Mutterstrasse 5
A-6800 Feldkirch (AT)

(72) Erfinder: Kirchler, Manfred
Mutterstrasse 5
A-6800 Feldkirch (AT)

(74) Vertreter: Hefel, Herbert, Dipl.-Ing.
Egelseestrasse 65a Postfach 61
A-6800 Feldkirch (AT)

## Beschreibung

Die Erfindung bezieht sich auf eine Einrichtung zur Erzeugung und Aufbewahrung von Schlagobers nach den Merkmalen des Oberbegriffes des Patentanspruches 1.

Handgeführte Geräte dieser Art sind bekannt. Sie werden in privaten Haushalten verwendet wie auch vornehmlich in gastronomischen Betrieben. Um den im Gehäuse des Gerätes befindlichen Rahmvorrat frisch zu halten, werden diese Geräte in Kühlschränken aufbewahrt, aus welchen sie im Bedarfsfall entnommen werden müssen. Das ist, insbesondere bei gastronomischen Betrieben, sehr umständlich.

Bekannt ist ein Kühlgerät (FR-PS 1330 745), in welches ein Trinkbecher gestellt werden kann. Das Kühlelement liegt dann je nach Ausgestaltung des Gerätes entweder am Boden des Trinkbechers an oder an seiner Seitenwand. Auch Flaschenkühler sind bekannt (FR-PS 2435 821), auch sie werden mit einem Thermoelement betrieben, der Boden des Flaschenkühlers ist flach ausgebildet, die Ausgußöffnung der Flasche weist nach oben, und der Kühlbehälter besitzt darüberhinaus noch einen Verschlußdeckel, der abgehoben werden muß, wenn die gekühlte Flasche dem Flaschenkühler entnommen werden soll.

Die Erfindung geht nun von der eingangs genannten Einrichtung zur Erzeugung und Aufbewahrung von Schlagobers aus, und sie zielt darauf ab, die Handhabung eines solchen Gerätes zu vereinfachen und für solche Geräte einen Halter vorzusehen, in welchem das Gerät stets griffbereit aufbewahrt und trotzdem der im Gerät befindliche Rahmvorrat frischgehalten werden kann.

Ein solches handgeführtes Gerät bzw. sein zylindrisches Gehäuse besitzt einen relativ kleinen Durchmesser, damit das Gerät mit einer Hand gehalten werden kann – in gastronomischen Betrieben in der Regel von Frauenhänden –, andererseits soll das Volumen des Gehäuses nicht allzu knapp bemessen sein, damit eine entsprechend große Menge Rahm bevorratet werden kann, um nicht ständig das Gerät nachfüllen zu müssen. Der das Gerät aufnehmende Halter bzw. sein Aufnahmeraum soll ferner hinsichtlich seines Durchmessers so groß bemessen sein, daß das Gerät ohne Schwierigkeiten aus dem Halter heraus und in den Halter hinein gegeben werden kann, wobei das Gerät zur Optimierung der Kühlung stets in diesem Behälter zentriert stehen soll, ohne daß es dazu von Seiten der Bedienungsperson einer besonderen Aufmerksamkeit bedarf. Rahm ist darüberhinaus ein sehr empfindliches Gut und im übrigen handelt es sich um relativ kleinvolumige Geräte. Sie müssen ja ständig manipuliert werden, dennoch ist eine nicht unerhebliche Kühlleistung hier zu erbringen.

Erfindungsgemäß wird nun die Lösung dieser komplexen Aufgabe durch jene Maßnahmen erreicht, die Gegenstand des kennzeichnenden Teiles des Patentanspruches 1 sind.

Dank des erfindungsgemäßen Vorschlages ist es nun möglich, für den Wärmeübergang gegenüber herkömmlichen Konstruktionen eine doch relativ große Fläche zu schaffen, deren flächenhafte Ausdehnung für die Kühlleistung maßgeblich ist. Dabei wird noch zusätzlich die Auslaßtülle mit dem Homogenisator direkt der Kühlung unterworfen, so daß beim bestimmungsgemäßen Einsatz des Gerätes der Rahm bzw. der Schlagobers den kühlen Homogenisator bzw. gekühlte Teile durchfließt, was für die Qualität des Schlagobers von ganz wesentlicher Bedeutung ist und nicht, wie bei herkömmlichen Geräten, zuerst aus der Tülle flüssiger Rahm austritt. Was die Wärmeübergangsfläche betrifft, so ist die Kegelfläche um ein erhebliches Maß größer als eine reine Kreisfläche, die die Querschnittsfläche oder Bodenfläche des Gerätes darstellen könnte. Darüberhinaus ist das Gefäß vom Halter in jener Stellung aufgenommen, die seiner Betriebsstellung oder Benutzungsstelle in der Hand der Bedienungsperson entspricht, was die Handhabung des Gerätes außerordentlich erleichtert.

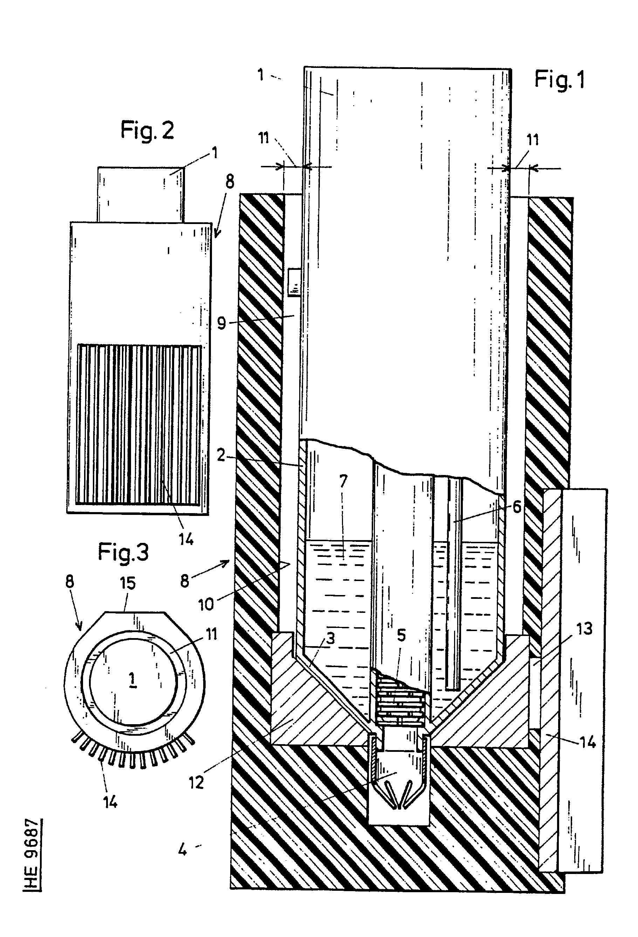

Um die Erfindung zu veranschaulichen, wird sie anhand der Zeichnung näher erläutert. Es zeigen : Fig. 1 einen vertikalen Schnitt durch einen Halter mit aufgenommenem Gerät ; Fig. 2 eine Ansicht und Fig. 3 einen Grundriß, beide Darstellungen in einem gegenüber Fig. 1 verkleinerten Maßstab.

Das Gerät 1 zur Erzeugung von Schlagobers besitzt ein zylindrisches Gehäuse 2, dessen eine Stirnseite als Kegel 3 ausgebildet ist, dessen Spitze eine Auslaßtülle 4 trägt. In diese Auslaßtülle 4 mündet aus dem Inneren des Gehäuses 2 ein Homogenisator 5. In diesem Gehäuse 2 sind ferner eine hier in der Darstellung nicht sichtbare Pumpe, ein Antriebsmotor für die Pumpe, eine Druckleitung und eine Ansaugleitung 6 untergebracht, letztere ist zum Teil in Fig. 1 zu sehen. Zur Energieversorgung des Antriebsmotors für die Pumpe kann in diesem Gehäuse auch noch ein Akkumulator angeordnet sein, das Gerät kann aber auch mit einem Netzanschluß versehen werden. Der untere Teil des Gehäuses 2, der in Fig. 1 aufgerissen dargestellt ist, dient als Vorratsraum für den Rahm 7, aus welchem mit Hilfe dieses Gerätes Schlagobers gefertigt wird.

Der Halter 8, der beispielsweise zum überwiegenden Teil aus einem geeigneten, stabilen, wärmeisolierendem Kunststoffschaum gefertigt sein kann, besitzt einen in vertikaler Richtung sich erstreckender Hohlraum 9, der nach obn hin offen ist und dessen innere Höhe kleiner ist als die axiale Länge des Gerätes 1, so daß das vom Halter 8 aufgenommene Gerät gegenüber diesem nach oben vorsteht, wie auch die Fig. 1 klar und eindeutig veranschaulicht. Dieser Hohlraum 9 ist korrespondierend zur Form des Gehäuses 2 des Gerätes 1 ausgebildet, wobei die inneren Abmessungen des Hohlraumes 9 einerseits und die äußeren Abmessungen des Gehäuses (2) des Gerätes (1) andererseits so festgelegt sind, daß zwischen der seitlichen Wandung 10 des Hohlraumes 9 und der Außenseite des Gehäuses 2 ein Zwischenraum 11 ausgespart ist, der das Einführen des Gerätes 1 in den Hohlraum 9 erleichtert, ohne daß die Kühlfunktion des Halters, die im folgenden noch erklärt werden wird, beeinträchtigt ist. Der Boden 12 des Hohlraumes 9 ist korrespondierend zur kegeligen Stirnseite des Gerätes 1 ausgebildet und darüberhinaus aus einem wärmeleitenden Material gefertigt. Dieser Boden 12 ist also als Hohlkegel ausgestaltet. Dieser als Hohlkegel ausgebildete Boden 12 ist nun mit der Kaltseite eines Peltierelementes 13 verbunden, dessen Warmseite im wärmeleitender Verbindung mit einer im Querschnitt kammartig ausgebildeten Profilleiste 14 steht, wobei sich diese Profilleiste 14 parallel zur Achse des Hohlraumes 9 erstreckt und der überwiegende Teil dieser Profilleiste 14 außerhalb des eigentlichen Halters 8 angeordnet ist. Dieses Peltierelement 13 ist mit einer Gleichstromquelle verbunden und mit Regeleinrichtungen, die hier nicht dargestellt sind und welche zweckmäßigerweise im Halter 8 integriert sein können. Diese für den Betrieb des Peltierelementes notwendigen Bestandteile arbeiten auf elektronischer Basis, können raumsparend infolge ihrer Kleinheit untergebracht werden und finden in diesem Halter ohne weiteres Platz.

Ist beim gezeigten Ausführungsbeispiel der als Hohlkegel ausgebildete Boden 12 aus wärmeleitendem Material gefertigt, die Wandteile des Halters 8 hingegen aus geschäumtem Kunststoff, so ist zu vermerken, daß es im Rahmen der Erfindung liegt, auch die innere Seitenwandung 10 des Hohlraumes 9 aus wärmeleitendem Material zu fertigen und diese Seitenwand 10 in wärmeleitender Weise mit dem Boden 12 zu verbinden und/oder auch an dieser Seitenwandung 10 zusätzlich ein Peltierelement anzuordnen, das mit einem wärmeableitenden Profil verbunden wird. Die so ausgestattete Seitenwandung 10 kann sich dabei über die gesamte innere Höhe des Gerätes erstrecken oder aber nur über einen Teil dieser Höhe.

Ist ein Abschnitt 15 der Außenwand des Halters 8 abgeflacht gestaltet (siehe Fig. 3), so kann der Halter 8 beispielsweise an einer Raumwand oder einer Schrankwand befestigt werden. Das beschriebene Ausführungsbeispiel zeigt ein Gerät mit einem zylindrischen Gehäuse 2 und einem kegeligen Stirnabschluß. Grundsätzlich wäre es möglich, das Gehäuse 2 als Quader auszugestalten und den stirnseitigen Abschluß pyramidenförmig. Auch ein ebener Abschluß könnte grundsätzlich vorgesehen sein. In all diesen Fällen ist es jedoch zweckmäßig, den Boden 12 korrespondierend zur stirnseitigen Gestaltung des Gehäuses 2 zu formen. Ist im gezeigten Ausführungsbeispiel nur der Boden 12 aus wärmeleitendem Material gefertigt und mit einem Peltierelement 13 verbunden, so ist es auch möglich und denkbar, nur die Seitenwandung 10 des Hohlraumes 9 aus wärmeleitendem Material zu fertigen und in der besprochenen Weise mit einem Peltierelement 13 wärmeleitend zu koppeln. Kalte Luft ist bekanntlich schwerer als warme Luft. Es ist daher auch in diesem Falle sichergestellt, daß trotz des nach oben offenen Hohlraumes 9 in diesem die abgekühlte Luft erhalten und bewahrt bleibt. Zweckmäßig ist es jedoch, solche Wandteile direkt durch eine Verbindung mit einem Peltierelement zu kühlen, an welchen das in den Halter 8 eingeführte Gerät 1 mit Teilen seiner Gehäusewandung unmittelbar anliegt, wie dies auch im Zusammenhang mit Fig. 1 gezeigt und erläutert worden ist. Wie schon erwähnt, ist es möglich, den Stirnabschluß des Gehäuses 2 mit der Tülle 4 eben auszugestalten. Durch die kegelige Ausgestaltung dieser Stirnseite, wie vorstehend beschrieben und in der Zeichnung gezeigt, kann jedoch jener Flächenteil vergrößert werden, der am gekühlten Wandteil des Halters 8 anliegt, als dies bei einem stirnseitigen Gehäuseabschluß der Fall wäre, der eben gestaltet ist.

Dank der Erfindung ist es möglich, das Gerät zur Erzeugung von Schlagobers nicht nur stets griffbereit aufzubewahren, sondern darüberhinaus auch noch den im Gerät bevorrateten Rahm durch die besondere Gestaltung des Halters 8 frisch zu halten, was zu erreichen Ziel und Aufgabe der Erfindung ist.

Ist für die Energieversorgung des hier nicht gezeigten Antriebsmotors für die Pumpe ein Akkumulator im Gehäuse 2 vorgesehen, so kann der Halter noch zusätzlich so ausgestaltet werden, daß beim Einführen des Gerätes 1 in den Halter 8 dieser Akkumulator mit einem Ladegerät elektrisch verbunden wird, wobei dieses Ladegerät ebenfalls im Halter 8 untergebracht sein kann.

Wurde die Erfindung anhand eines Ausführungsbeispieles beschrieben, das einen eingebauten Motor zum Antrieb einer Pumpe besitzt, so ist hier noch zu vermerken, daß die Erfindung auch in Verbindung mit anders konzipierten Geräten zur Erzeugung von Schlagobers verwendbar ist, beispielsweise seien handgeführte Geräte hier erwähnt, die mit einem Preßluftantrieb arbeiten oder Geräte mit Gaspatronen.

**Ansprüche**

1. Einrichtung zur Erzeugung und Aufbewahrung von Schlagobers mit einem handgeführten Gerät (1), das ein prismatisches oder zylindrisches Gehäuse (2), eine daran stirnseitig angeordnete Auslaßtülle (4), einen Vorratsraum für die Aufnahme von Rahm sowie die zur Erzeugung von Schlagobers erforderlichen Bauteile wie Pumpe, Antriebsmotor, Saug- und Druckleitung und Homogenisator (5) aufweist, und mit einem Halter (8) für das Gerät (1), der einen das Gerät (1) aufnehmenden Wandteil (12) aus wärmeleitendem Material, ein Peltierelement (13), das mit seiner Kaltseite an dem Wandteil (12) anliegt, und eine kammartig ausgebildete Profilleiste (14), die ebenfalls aus wärmeleitendem Material besteht und an der Warmseite des Peltierelements (13) anliegt, aufweist, dadurch gekennzeichnet, daß der Halter (8) einen nach oben offenen Hohlraum (9) aufweist, der korrespondierend zur Form des Gehäuses (2) ausgebildet ist und eine geringere Höhe als dieses aufweist, so daß das vom Halter (8) aufgenommene Gerät (1) über den Halter nach oben vorsteht, daß die die Auslaßtülle aufweisende Stirnseite des Gehäuses (2) kegelförmig ausgebildet ist und daß der Wandteil (12) den Boden des Hohlraums (9) bildet und als ein korrespondierend zur Kegelfläche des Gehäuses (2) geformter Hohlkegel mit einer mittigen Aussparung für die Auslaßtülle (4) ausgebildet ist, so daß bei vom Halter (8) aufgenommenem Gerät die beiden Kegelflächen aneinanderliegen.

2. Einrichtung nach Anspruch 1, dadurch gekennzeichnet, daß die Form des Gehäuses (2) und des Hohlraums (9) so gewählt ist, daß zwischen der seitlichen Wandung (10) des Hohlraums (9) und dem von diesem aufgenommenen Gehäuse (2) des Gerätes (1) ein Zwischenraum vorhanden ist.

## Claims

1. A device for the production and preservation of whipped cream, having a manually guided appliance (1) comprising a prismatic or cylindrical casing (2), an outlet nozzle (4) mounted on the front end thereof, a storage space for receiving cream and the components required to produce whipped cream, such as the pump, drive motor, suction and pressure lines and homogenizer (5), and having a holder (8) for the appliance (1) which comprises a wall portion (12) of heat-conducting material receiving the appliance (1), a Peltier element (13) resting with its cold side on the wall portion (12), and a profiled strip (14) formed in the manner of a comb and likewise consisting of heat-conducting material and resting on the hot side of the Peltier element (13), characterized in that the holder (8) has a cavity (9) open at the top and made corresponding to the shape of the casing (2) and having a lower height than the latter, so that the appliance (1) received by the holder (8) projects upwards above the holder, the end face of the casing (2) comprising the outlet nozzle is tapered and the well portion (12) forms the base of the cavity (9) end is constructed as a hollow cone moulded to correspond to the tapered face of the casing (2) and having a central recess for the outlet nozzle (4), so that when the appliance is held by the holder (8) the two tapered faces rest against each other.

2. A device according to Claim 1, characterized in that the shape of the casing (2) and the cavity (9) is selected in such a way that an interspace is present between the lateral wall (10) of the cavity (9) and the casing (2) of the appliance (1) received thereby.

## Revendications

1. Dispositif de production et de conservation de crème fouettée avec un appareil manuel (1), qui présente un corps prismatique ou cylindrique (2), une douille de sortie (4) disposée sur la face frontale de celui-ci, une chambre d'approvisionnement destinée à la réception de la crème, ainsi que les organes nécessaires pour la production de crème fouettée, tels que pompe, moteur d'entraînement, conduites d'aspiration et de refoulement et un homogénéisateur (5) et, en outre, un support (8) pour l'appareil (1) qui présente une partie de paroi (12) recevant l'appareil (1) en matière conduisant la chaleur, un élément Peltier (13) qui s'appuie par son côté froid sur la partie de l'appareil (12) et une bande profilée (14) constituée en forme de peigne, qui est également réalisée dans une matière conduisant la chaleur et s'appuie sur le côté chaud de l'élément Peltier (13), caractérisé en ce que le support (8) présente une cavité (9) ouverte vers le haut, dont la forme correspond à la forme du corps (2) et qui présente une moindre hauteur que celui-ci, de telle sorte que l'appareil (1) contenu dans le support (8) dépasse du support vers le haut, en ce que la face frontale du corps (2), qui comporte la douille de sortie, est réalisée en forme de cône et en ce que la partie de paroi (12) constitue le fond de la cavité (9) et est constituée par un cône creux dont la forme s'adapte à la surface conique du corps (2) avec un évidement central pour la douille de sortie (4) de telle sorte que les deux surfaces coniques sont juxtaposées sur l'appareil contenu dans le support (8).

2. Dispositif selon la revendication 1, caractérisé en ce que les formes du corps (2) et de la cavité (9) sont choisies de telle sorte qu'il existe un intervalle entre la paroi latérale (10) de la cavité (9) et le corps (2), logé dans celle-ci, de l'appareil (1).

Fig. 1

Fig. 2

Fig. 3

HE 9687